# EUROPÄISCHE PATENTSCHRIFT

(11) **EP 1 303 376 B1**
(45) Veröffentlichungstag und Bekanntmachung des Hinweises auf die Patenterteilung: **19.12.2007**
(21) Anmeldenummer: 01944723.4
(22) Anmeldetag: 27.06.2001
(51) Int. Cl.: B23K 11/30

(54) **VORRICHTUNG ZUM SCHWEISSEN EINER DRAHTGITTERMATTE**
DEVICE FOR THE WELDING OF A WIRE MESH GRID
DISPOSITIF DE SOUDAGE D'UN TREILLIS METALLIQUE

(30) Priorität: 24.07.2000 AT 12982000
(43) Veröffentlichungstag der Anmeldung: 23.04.2003
(73) Patentinhaber: EVG Entwicklungs- u. Verwertungs- Gesellschaft m.b.H., A-8074 Raaba (AT)
(72) Erfinder: RITTER, Klaus, A-8042 Graz (AT)
(74) Vertreter: Holzer, Walter
(86) Internationale Anmeldenummer: PCT/AT2001/000210
(87) Internationale Veröffentlichungsnummer: WO 2002/007922

(56) Entgegenhaltungen:
- WO-A-90/15677
- GB-A- 2 258 837
- US-A- 2 799 768
- US-A- 4 439 658

## Beschreibung

Die Erfindung betrifft eine Vorrichtung zum Schweißen einer Drahtgittermatte aus einander kreuzenden Längs- und Querdrähten, mit einer drehbaren Ober- und Unterelektrode in Form je eines scheibenförmigen Vielecks, wobei zumindest die Oberelektrode heb- und senkbar ist und die Ober- und Unterelektroden in eine Arbeitsstellung drehbar sind, in welcher jeweils eine Vieleckfläche parallel zu den Längsdrähten verläuft.

Aus der DE-A1-27 26 883 ist eine Schweißelektrode zum Schweißen von Drahtgittermatten bekannt, die nach Art eines Kreisringes bzw. einer diesem ähnlichen Konfiguration in Vieleckform, etwa in Form eines Oktaeders, ausgebildet ist. Die bekannte Vorrichtung hat den Nachteil, daß gegen eine Verschmutzung der Kontaktflächen der Schweißelektroden keine Vorsorge getroffen ist. Ein weiterer Nachteil liegt darin, daß die zu verschweißenden Drähte mit ihrer runden Oberfläche auf einer ebenen Fläche der Schweißelektrode aufliegen und daher nur eine Linienberührung zwischen dem Draht und der Schweißelektrode besteht.

Aufgabe der Erfindung ist es, die geschilderten Nachteile zu vermeiden und eine Vorrichtung der einleitend angegebenen Art zu schaffen, die es ermöglicht, vielfach anwendbare Schweißelektroden zu schaffen, die eine sichere und saubere Kontaktierung der Drähte mit der Schweißelektrode gewährleisten. Die erfindungsgemäße Vorrichtung zeichnet sich dadurch aus, daß die Oberelektrode und die Unterelektrode an jeder Vieleckfläche einen innenliegenden Verteilkanal für Reinigungsluft, vorzugsweise Druckluft, aufweisen, wobei jeder Verteilkanal zumindest eine in der Mitte der Vieleckfläche endende Ausblasöffnung hat, und daß der Oberelektrode und der Unterelektrode je ein Verteilstück für die Reinigungsluft zugeordnet sind, wobei die Verteilstücke je einen Anschluß für die Speisung mit Reinigungsluft und innenliegende, mit dem Anschluß und den in Arbeitsstellung befindlichen Verteilkanälen der Ober- und Unterelektrode verbundene Luftkanäle aufweisen.

Gemäß einem weiteren Merkmal der Erfindung ist vorgesehen, daß die Oberelektrode an ihrem Umfang eine zur Aufnahme des Querdrahtes beim Schweißen dienende, vorzugsweise V-förmig ausgebildete Querdrahtrille aufweist, daß die Unterelektrode an jeder Vieleckfläche eine parallel zur Längsdrahtebene verlaufende, zur Aufnahme des Längsdrahtes beim Schweißen dienende, vorzugsweise V-förmig ausgebildete Längsdrahtrille aufweist, wobei die Ausblasöffnungen jeweils in der Mitte am Grund der Querdraht- bzw. Längsdrahtrillen enden.

Vorzugsweise sind bei mehreren Ausblasöffnungen je Vieleckfläche die Ausblasöffnungen symmetrisch in den Drahtrillen verteilt bzw. verlaufen sie bei fehlenden Drahtrillen ebenfalls symmetrisch verteilt in dem Bereich der Vieleckfläche, der von den zu verschweißenden Drähten in ihrer Schweißposition auf den Schweißelektroden eingenommen wird.

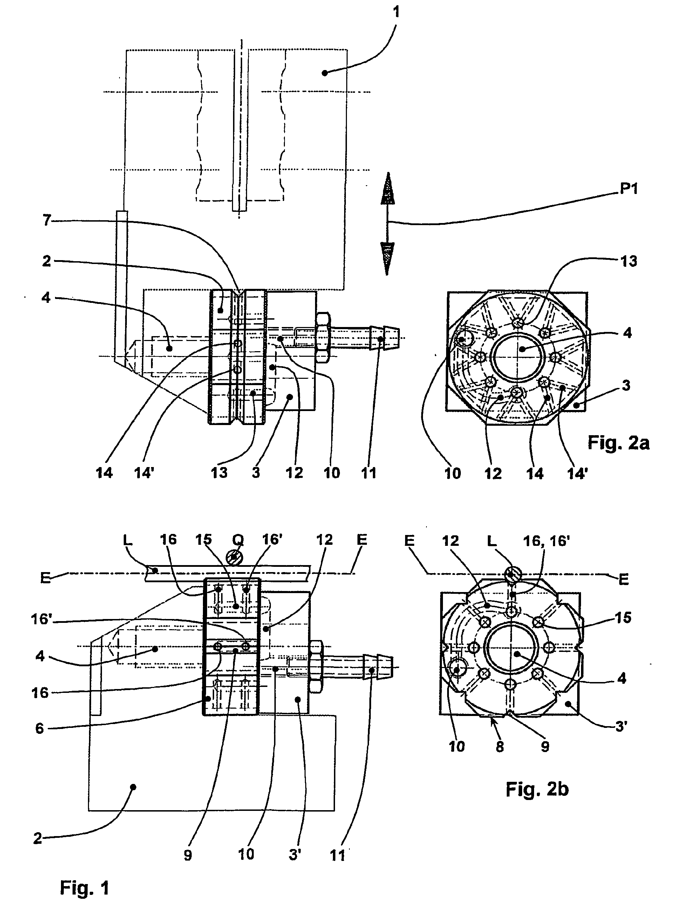

Weitere Merkmale und Vorteile der Erfindung werden nachfolgend an einem Ausführungsbeispiel unter Bezugnahme auf die Zeichnung näher erläutert. Es zeigen: Fig. 1 eine schematische Seitenansicht eines Ausführungsbeispieles einer erfindungsgemäßen Vorrichtung, Fig. 2a eine schematische Seitenansicht der Oberelektrode und Fig. 2b eine schematische Seitenansicht der Unterelektrode.

Die in den Fig. 1, 2a und 2b dargestellte Vorrichtung findet beim Schweißen von Drahtgittermatten aus einander kreuzenden Längsdrähten L und Querdrähten Q Verwendung, wobei mehrere Längsdrähte L parallel und gemeinsam, mit seitlichem Abstand zueinander entlang der Längsdrahtebene E-E zugeführt werden und die Querdrähte Q senkrecht zu den Längsdrähten L auf diesen in der Schweißposition abgelegt werden. Die Oberfläche der Drähte L, Q kann glatt oder, wie bei Bewehrungsstählen üblich, gerippt sein. Des weiteren können die Oberflächen der Drähte blank oder mit einer Zunderschicht oder mit einer Zinkschicht versehen sein.

Die Vorrichtung weist einen oberen Elektrodenhalter 1 auf, der entsprechend den Richtungen des Doppelpfeiles P1 heb- und senkbar ist. Am unteren Ende des oberen Elektrodenhalters 1 sind eine Oberelektrode 2 und ein Luftverteilstück 3 mit Hilfe einer Schraubverbindung 4 befestigt.

Die Vorrichtung weist außerdem einen unteren Elektrodenhalter 5 auf, der unterhalb des oberen Elektrodenhalters 1 angeordnet und vorzugsweise ortsfest ist. Im Rahmen der Erfindung ist es jedoch auch möglich, den unteren Elektrodenhalter 5 ebenfalls heb- und senkbar auszuführen. Am unteren Ende des unteren Elektrodenhalters 5 ist eine Unterelektrode 6 und ein zum Luftverteilstück 3 baugleiches Luftverteilstück 3' mit Hilfe einer Schraubverbindung 4 befestigt.

Die Oberelektrode 2 und die Unterelektrode 6 sind scheibenförmig ausgebildet und haben die Form eines Vieleckes, beispielsweise eines Oktaeders. Die Oberelektrode 2 weist an ihrem Umfang eine Querdrahtrille 7 auf, die zur Aufnahme des Querdrahtes Q beim Schweißen dient, V-förmig ausgebildet und an die Abmessungen des Querdrahtes Q angepasst ist. Die Unterelektrode 6 weist an jeder Fläche 8 des Vielecks eine parallel zur Längsdrahtebene E-E verlaufende Längsdrahtrille 9 auf, die zur Aufnahme des Längsdrahtes L beim Schweißen dient, V-förmig ausgebildet und an die Abmessungen des Längsdrahtes L angepasst ist. Im Rahmen der Erfindung ist jedoch auch möglich, andere an die Querschnittsform der Quer- und Längsdrähte angepasste Formen für die Querdrahtrille 7 und die Längsdrahtrille 9 zu verwenden.

Die Luftverteilstücke 3, 3' besitzen je einen Eintrittskanal 10, der über einen Luftanschlussstutzen 11 die Luftverteilstücke 3, 3' mit Reinigungsluft, üblicherweise Druckluft versorgt. Im Rahmen der Erfindung können andere technische Gase, wie z.B. Stickstoff, zur Reinigung verwendet werden.

An den Eintrittskanal 10 schließt ein Luftkanal 12 an. Für jede Vieleckfläche 8 weist die Oberelektrode 2 einen oberen Verteilkanal 13 auf, der parallel zur Längsdrahtebene E-E verläuft und jeweils zwei vom Ende des Verteilkanals 13 V-förmig wegführende, bis zum Grund der Querdrahtrille 7 reichende Ausblasöffnungen 14, 14' besitzt. Jede Vieleckfläche 8 der Oberelektrode 2 ist mit zwei derartigen Ausblasöffnungen 14, 14' versehen. Der Luftkanal 12 ist derart ausgestaltet, daß jeweils nur der Verteilkanal 13, dessen Vieleckfläche 8 der Längsdrahtebene E-E zugewandt und sich in Arbeitsstellung befindet, mit dem Luftkanal 12 verbunden ist. Nur in dieser Arbeitsstellung, der Schweißstellung, gelangt die Reinigungsluft vom Luftanschlussstutzen 11 über den Eintrittskanal 10, den Luftkanal 12 und den oberen Verteilkanal 13 in die Ausblasöffnungen 14, 14'.

Das Luftverteilstück 3' ist identisch zum Luftverteilstück 3 aufgebaut. Für jede Vieleckfläche 8 weist die Unterelektrode 6 einen unteren Verteilkanal 15 auf, der parallel zur Längsdrahtebene E-E verläuft und zwei senkrecht vom Verteilkanal 15 wegführende, bis zum Grund der Längsdrahtrille 9 reichende Ausblasöffnungen 16, 16' aufweist. Der Luftkanal 12 im Luftverteilstück 3' ist derart ausgestaltet, daß jeweils nur der Verteilkanal 15, dessen Vieleckfläche 8 der Längsdrahtebene E-E zugewandt ist, sich also in Arbeitsstellung befindet, mit dem Luftkanal 12 verbunden ist. Nur in dieser Arbeitsstellung, der Schweißstellung gelangt die Reinigungsluft vom Luftanschlussstutzen 11 über den Eintrittskanal 10, den Luftkanal 12 und den oberen Verteilkanal 15 in die Ausblasöffnungen 16, 16'.

Die erfindungsgemäße Vorrichtung arbeitet in folgender Weise:

Nach dem Zuführen und Ablegen des Querdrahtes Q in der Schweißposition wird der obere Elektrodenhalter 1 mit der Oberelektrode 2 soweit abgesenkt, daß der Querdraht Q in der Querdrahtrille 7 liegt. Kurz vor dem Absenken der Oberelektrode 2 wird die Reinigungsluftzufuhr für die Oberelektrode 2 und für die Unterelektrode 6 eingeschaltet, wodurch die Querdrahtrille 7 und die Längsdrahtrille 9 mit Reinigungsluft gespült werden und etwaige Verunreinigungen in der Querdrahtrille 7 und in der Längsdrahtrille 9 weggeblasen werden. Die Luftversorgung bleibt während des nachfolgenden Schweißvorganges sowie noch einige Zeit nach Beendigung des Schweißvorganges während des Abhebens der Oberelektrode 2 aufrecht. Dieses Nachblasen ist besonders wichtig, weil die Verunreinigungen insbesondere in der Längsdrahtrille 9 erst beim Abheben der Oberelektrode 2 und damit Entlasten und geringfügigem Abheben der Längsdrähte L aus der Längsdrahtrille 9 wirkungsvoll weggeblasen werden können. Um den Steuerungsaufwand gering zu halten, ist es im Rahmen der Erfindung möglich, die Ober- und Unterelektrode 2; 6 ständig mit Reinigungsluft zu beaufschlagen. Der erhöhte Reinigungsluftverbrauch beim ständigen Blasen ist hierbei der möglichen Einsparung einer Steuerung wirtschaftlich gegenüber zu stellen.

Sobald die Kontaktfläche der Ober- bzw. Unterelektrode 2; 6, insbesondere die Quer- und Längsdrahtrillen 7; 9 durch die wiederholten Schweißvorgänge mechanisch verschlissen sind, oder die Verunreinigungen so stark sind, daß sie nicht mehr weggeblasen oder mechanisch entfernt werden können, werden die Befestigungen 4 der entsprechenden Elektroden 2 bzw. 6 gelöst und die Elektroden soweit gedreht, bis eine neue, unverbrauchte Vielecksfläche 8 parallel zur Längsdrahtebene E-E liegt, d.h. in Arbeitsposition gelangt. Die Befestigungen 4 werden wieder angezogen und der Schweißvorgang kann fortgesetzt werden. Während dieser Umbauphase wird die Reinigungsluft abgeschaltet.

Je nach Oberflächenbeschaffenheit der Drähte können beim Verschweißen der Drähte Abbrand, Schweißspritzer, Zunderreste, Ziehmittelreste, Zinkdämpfe u.ä. die Oberfläche der Schweißelektroden verschmutzen. Die erfindungsgemäße Vorrichtung hat den Vorteil, daß die Oberfläche und insbesondere die Querdraht- und Längsdrahtrillen der Ober- und Unterelektrode von diesen Verunreinigungen frei gehalten werden und dadurch die Qualität der Schweißverbindung durch das Vermeiden dieser Verunreinigungen gleichmäßig bleibt und außerdem die Standzeit der Elektroden erhöht wird.

Es versteht sich, daß das dargestellte Ausführungsbeispiel im Rahmen des allgemeinen Erfindungsgedankens verschiedentlich, insbesondere hinsichtlich der Ausgestaltung und Ausführung der Luftkanäle in den Luftverteilstücken abgewandelt werden kann. Im Rahmen der Erfindung ist es möglich, die Querdraht- bzw. Längsdrahtrillen mit nur einer Ausblasöffnung oder auch mit mehr als zwei Ausblasöffnungen auszustatten. Wenn mehrere Ausblasöffnungen vorgesehen sind, werden diese symmetrisch über die Drahtrillen verteilt. Ferner ist es im Rahmen der Erfindung möglich, die Ausblasöffnungen zumindest im Bereich der Quer- bzw. Längsdrahtrillen mit parallel zu den Querdraht- bzw. Längsdrahtrillen verlaufenden Schlitzen zu versehen.

Im Rahmen der Erfindung ist es außerdem möglich, zumindest eine Schweißelektrode ohne Drahtrillen zu verwenden. Dies ist dann vorteilhaft, wenn z.B. zwei nebeneinander liegende Drähte als sog. Doppeldrähte verschweißt werden. Die Ausblasöffnungen enden in diesem Fall jeweils in der Mitte der Vieleckflächen der entsprechenden Schweißelektrode. Mehrere Ausblasöffnungen sind ebenfalls symmetrisch verteilt und verlaufen in dem Bereich, der von den zu verschweißenden Drähten Q, L in ihrer Schweißposition auf den Schweißelektroden eingenommen werden. Bei schlitzförmig ausgebildeten Ausblasöffnungen verlaufen die Schlitze ebenfalls parallel zu den zu verschweißenden Drähten Q, L.

## Patentansprüche

1. Vorrichtung zum Schweißen einer Drahtgittermatte aus einander kreuzenden Längs- und Querdrähten, mit einer drehbaren Ober- und Unterelektrode in Form je eines scheibenförmigen Vielecks, wobei zumindest die Oberelektrode heb- und senkbar ist und die Ober- und Unterelektroden in Arbeitsstellung drehbar sind, in welcher jeweils eine Vieleckfläche parallel zu den Längsdrähten verläuft, **dadurch gekennzeichnet, daß** die Oberelektrode (2) und die Unterelektrode (6) an jeder Vieleckfläche (8) einen innenliegenden Verteilkanal (13; 15) für Reinigungsluft, vorzugsweise Druckluft, aufweisen, wobei jeder Verteilkanal (13, 15) zumindest eine in der Mitte der Vieleckfläche (8) endende Ausblasöffnung (14, 14'; 16, 16') hat, und daß der Oberelektrode (2) und der Unterelektrode (6) je ein Verteilstück (3; 3') für die Reinigungsluft zugeordnet sind, wobei die Verteilstücke (3, 3') je einen Anschluß (11) für die Speisung mit Reinigungsluft und innenliegende, mit dem Anschluß (11) und den in Arbeitsstellung befindlichen Verteilkanälen (13; 15) der Ober- und Unterelektrode (2; 6) verbundene Luftkanäle (12) aufweisen.

2. Vorrichtung nach Anspruch 1, **dadurch gekennzeichnet, daß** die Oberelektrode (2) an ihrem Umfang eine zur Aufnahme des Querdrahtes (Q) beim Schweißen dienende, vorzugsweise V-förmig ausgebildete Querdrahtrille (7) aufweist, daß die Unterelektrode (6) an jeder Vieleckfläche (8) eine parallel zur Längsdrahtebene (E-E) verlaufende, zur Aufnahme des Längsdrahtes (L) beim Schweißen dienende, vorzugsweise V-förmig ausgebildete Längsdrahtrille (9) aufweist, wobei die Ausblasöffnungen (14, 14'; 16, 16') jeweils in der Mitte am Grund der Querdraht- bzw. Längsdrahtrillen (7; 9) enden.

3. Vorrichtung nach einem der Ansprüche 1 oder 2, **dadurch gekennzeichnet, daß** die Ausblasöffnungen (14, 14'; 16, 16') rund sind.

4. Vorrichtung nach einem der Ansprüche 1 bis 3, **dadurch gekennzeichnet, daß** bei mehreren Ausblasöffnungen (14, 14'; 16, 16') je Vieleckfläche (8) die Ausblasöffnungen symmetrisch in den Drahtrillen (7; 9) verteilt sind bzw. bei fehlenden Drahtrillen ebenfalls symmetrisch verteilt im dem Bereich der Vieleckfläche (8) verlaufen, der von den zu verschweißenden Drähten (Q, L) in ihrer Schweißposition auf den Schweißelektroden (2, 6) eingenommen wird.

5. Vorrichtung nach Anspruch 1 oder 2, **dadurch gekennzeichnet, daß** die Ausblasöffnungen (14, 14'; 16, 16') schlitzförmig ausgebildet sind, wobei die Schlitze parallel zu den Drahtrillen (7; 9) bzw. zu den zu verschweißenden Drähten (Q, L) verlaufen.

6. Vorrichtung nach einem der Ansprüche 1 bis 5, **dadurch gekennzeichnet, daß** die Reinigungsluft ständig während der Betriebszeit der Schweißvorrichtung zuführbar ist.

7. Vorrichtung nach einem der Ansprüche 1 bis 6, **dadurch gekennzeichnet, daß** die Zufuhr der Reinigungsluft derart steuerbar ist, daß die Zufuhr vor dem Verschweißen der Drähte (Q, L) beginnt, während der Schweißung andauert und nach dem Abheben der Schweißelektrode (2; 6) endet.

## Claims

1. Apparatus for welding a wire mesh mat consisting of longitudinal and transverse wires intersecting each other, having rotatable upper and lower electrodes each in the form of a disc-shaped polygon, at least the upper electrode being capable of being raised and lowered, and the upper and lower electrodes being rotatable in the working position in which in each case a polygon face runs parallel to the longitudinal wires, **characterised in that** the upper electrode (2) and the lower electrode (6) comprise on each polygon face (8) an internal distributing channel (13; 15) for cleaning air, preferably compressed air, each distributing channel (13, 15) having at least one exhaust opening (14, 14'; 16, 16') ending in the middle of the polygon face (8), and **in that** the upper electrode (2) and the lower electrode (6) are each assigned a distributing piece (3; 3') for the cleaning air, the distributing pieces (3, 3') each having a connection (11) for supply with cleaning air and internal air channels (12) connected to the connection (11) and to the distributing channels (13; 15) of the upper and lower electrodes (2; 6) which are in the working position.

2. Apparatus according to claim 1, **characterised in that** the upper electrode (2) comprises at its circumference a preferably V-shaped transverse wire groove (7) which serves to receive the transverse wire (Q) during welding, **in that** the lower electrode (6) at each polygon face (8) has a preferably V-shaped longitudinal wire groove (9), which serves to receive the longitudinal wire (L) and runs parallel to the longitudinal wire plane (E-E), the exhaust openings (14, 14'; 16, 16') ending in each case in the middle at the bottom of the transverse wire or longitudinal wire grooves (7; 9) .

3. Apparatus according to either of claims 1 or 2, **characterised in that** the exhaust openings (14, 14'; 16, 16') are round.

4. Apparatus according to any of claims 1 to 3, **characterised in that**, where there are several exhaust openings (14, 14'; 16, 16') to each polygon face (8), the exhaust openings are distributed symmetrically in the wire grooves (7; 9) or, in the absence of wire grooves, likewise are symmetrically distributed in the region of the polygon face (8) which is occupied by the wires (Q, L) to be welded in their welding position on the welding electrodes (2, 6).

5. Apparatus according to claim 1 or 2, **characterised in that** the exhaust openings (14, 14'; 16, 16') are slot-shaped, the slots running parallel to the wire grooves (7; 9) or to the wires (Q, L) to be welded.

6. Apparatus according to any of claims 1 to 5, **characterised in that** the cleaning air can be supplied constantly during the running time of the welding apparatus.

7. Apparatus according to any of claims 1 to 6, **characterised in that** supply of the cleaning air can be controlled in such a way that supply begins before welding of the wires (Q, L), continues during welding and ends after lifting off the welding electrode (2; 6).

## Revendications

1. Dispositif pour le soudage d'un treillis métallique constitué de fils longitudinaux et transversaux se croisant, avec une électrode supérieure et inférieure rotative sous forme respectivement d'un polygone discoïde, dans lequel au moins l'électrode supérieure est relevable et abaissable, et l'électrode supérieure et l'électrode inférieure sont rotatives dans la position de travail, dans lequel respectivement une surface de polygone s'étend parallèlement aux fils longitudinaux, **caractérisé en ce que** l'électrode supérieure (2) et l'électrode inférieure (6) présentent sur chaque surface polygonale (8) un canal intérieur de distribution (13; 15) pour l'air de nettoyage, de préférence de l'air comprimé, de sorte que chaque canal de distribution (13 ; 15) possède au moins une ouverture de soufflage (14, 14' ; 16, 16') aboutissant au centre de la surface polygonale (8), et **en ce que**, à l'électrode supérieure (2) et à l'électrode inférieure (6), sont respectivement affectés un élément de distribution (3; 3') pour l'air de nettoyage, les éléments de distribution (3, 3') présentant respectivement un raccordement (11) pour l'alimentation en air de nettoyage et des canaux d'air (12) situés à l'intérieur et raccordés au raccord (11) et aux canaux de distribution (13 ; 15) situés en position de travail de l'électrode supérieure et de l'électrode inférieure (2 ; 6).

2. Dispositif selon la revendication 1, **caractérisé en ce que** l'électrode supérieure (2) présente, dans sa périphérie, une gorge pour fil transversal (7), de préférence en forme de V, servant à recevoir le fil transversal (Q) lors du soudage, **en ce que** l'électrode inférieure (6) sur chaque surface polygonale (8) présente une gorge pour fil longitudinal (9), de préférence en forme de V, s'étendant parallèlement au plan du fil longitudinal (E-E) servant à recevoir le fil longitudinal (L) lors du soudage, les ouvertures de soufflage (14, 14' ; 16, 16') aboutissant respectivement au centre, de la base des gorges pour fils transversaux ou longitudinaux (7 ; 9).

3. Dispositif selon l'une des revendications 1 ou 2, **caractérisé en ce que** les ouvertures de soufflage (14, 14' ; 16, 16') sont rondes.

4. Dispositif selon l'une des revendications 1 à 3, **caractérisé en ce que**, pour plusieurs ouvertures de soufflage (14, 14' ; 16, 16') par surface polygonale (8), sont respectivement réparties de façon symétrique les ouvertures de soufflage dans les gorges de fils (7 ; 9) ou, en l'absence de gorges pour fils, s'étendent également de façon répartie symétriquement dans la zone de la surface polygonale (8) qui est occupée par les fils à souder (Q, L) dans leur position de soudage sur les électrodes de soudage (2, 6).

5. Dispositif selon la revendication 1 ou 2, **caractérisé en ce que** les ouvertures de soufflage (14, 14'; 16, 16') sont configurées en forme de fentes, les fentes s'étendant parallèlement aux gorges de fils (7 ; 9) ou aux fils à souder (Q, L).

6. Dispositif selon l'une des revendications 1 à 5, **caractérisé en ce que** l'air de nettoyage est amené de façon constante pendant le temps de fonctionnement du dispositif de soudage.

7. Dispositif selon l'une des revendications 1 à 6, **caractérisé en ce que** l'amenée de l'air de nettoyage est commandée de telle sorte que l'amenée commence en amont du soudage des fils (Q, L), tandis que le soudage se poursuit et se termine après l'enlèvement de l'électrode de soudage (2 ; 6).
